# EUROPÄISCHE PATENTANMELDUNG

(11) **EP 1 510 778 A2**
(43) Veröffentlichungstag der Anmeldung: **02.03.2005**
(21) Anmeldenummer: 04019551.3
(22) Anmeldetag: 18.08.2004
(51) Int. Cl.: G01B 5/00, G01B 11/02, G01G 19/00, G07B 17/00

(54) **Postgut-Messgerät**

(30) Priorität: 25.08.2003 DE 10339345
(71) Anmelder: Wincor Nixdorf International GmbH, 33106 Paderborn (DE)
(72) Erfinder: Lutz, Bernhard, 33129 Delbrück (DE)

(57) **Zusammenfassung**

Ein Postgut-Messgerät (1) und ein Verfahren zur Bestimmung zumindest der Abmessungen eines Postgutes (2) nutzen eine mechanische Messeinrichtung (13) zur Bestimmung wenigstens der Abmessung des Postgutes (2) in wenigstens einer Richtung (Höhe h), welche bei der Messung auf das Postgut eine vorgegebene Kraft ausübt. Ergänzt wird die mechanische Messvorrichtung durch eine optische Messeinrichtung bzw. Kamera (19) zur Erfassung eines Bildes des Postgutes. Des weiteren ist eine Waage vorgesehen, so dass ein Rechner aus den ermittelten Daten das Porto des Postgutes ermitteln kann. Das Messgerät kann eine Schleusentür aufweisen und an ein Transportband gekoppelt sein.

## Beschreibung

Die Erfindung betrifft ein Postgut-Messgerät zur automatischen Bestimmung zumindest einer Abmessung eines Postgutes.

Aus der gattungsgemäßen DE 195 45 158 A1 ist es bekannt, die Abmessungen eines Postgutes optisch zu bestimmen. Aus den Abmessungen sowie i.allg. aus dem Gewicht lässt sich sodann in einfacher Weise mittels eines Rechners automatisch das zur Aufgabe des Postgutes zu zahlende Porto ermitteln. Die optische Bestimmung der Abmessungen arbeitet allerdings dann nicht zufriedenstellend, wenn das Postgut - z.B. ein Brief - Knicke oder dgl. aufweist, da in diesen Fällen die optisch ermittelten Abmessungen nicht zu einer korrekten Berechnung des Portos führen, denn beispielsweise das Porto eines Briefes erhöht sich natürlich nicht dadurch, dass der Brief durch einen Knick höher ist als im glatten Zustand.

Die Erfindung befasst sich mit dem Problem, den Einfluss von Knicken und dgl. auf die Bestimmung der Abmessungen des Postgutes zu verringern und somit in zuverlässiger Weise das Porto für das Postgut zu bestimmen.

Die Erfindung löst diese Aufgabe in Hinsicht auf das Messgerät durch den Gegenstand des Anspruchs 1 und in Hinsicht auf das Verfahren durch den Gegenstand des Anspruchs 14.

Durch den Einsatz einer mechanischen Messeinrichtung mit Tastmitteln ist eine Bestimmung zumindest einer Abmessung des Postgutes durch Berühren der Oberfläche des Postgutes mit den Tastmitteln ermöglicht. Die Tastmittel werden längs eines Weges verstellt und üben in der Endposition eine vorgegebene Kraft auf das Postgut aus, die insbesondere zwischen 0,5 und 10 Newton liegen kann. Aus der Länge des Verstellweges kann die zu bestimmende Abmessung des Postgutes ermittelt werden.. Ergänzt wird die mechanische Messvorrichtung durch eine optische Messeinrichtung und eine Waage. Ein Rechner ermittelt aus den gemessenen Daten das Porto.

Durch den Gegenstand der Ansprüche 1 und 14 ergibt sich der besondere Vorteil, dass Knicke, deformierte Ecken oder dgl. durch die Tastmittel vor der Messung ausgeglichen bzw. heruntergedrückt werden und damit die Messung durch derlei Effekte weniger verfälscht wird. Zudem kann bei unförmigen Päckchen mit unregelmäßiger Oberflächenstruktur die Höhe der höchsten Erhebung leicht festgestellt werden. Die Tastmittel drücken so lange gegen die Paketoberfläche, bis die durch das Postgut ausgeübte Gegenkraft der eingestellten Kraft an den Tastmitteln entspricht. So können beispielsweise bei einem Brief etwaige "Eselsohren" geglättet werden. Da die erforderliche Kraft zur Glättung des Postgutes nur überraschend gering ist, sind Beschädigungen des Postgutes so gut wie ausgeschlossen. Der die Messungen verfälschende Einfluss von Knicken und dgl. wird somit wesentlich verringert, was die Zuverlässigkeit der rechnerischen Ermittlung des Portos erhöht. Zudem kann bei unförmigen Postgütern in einfacher Weise schnell und zuverlässig die Höhe bestimmt werden.

Die übrigen Abmessungen des Postgutes werden mit einer optischen Messeinrichtung bestimmt, so dass aus der Bestimmung des Formats des Postgutes in Verbindung mit einer Gewichtsbestimmung durch eine Waage das benötigte Porto ermittelt werden kann.

Zweckmäßigerweise ist die optische Messeinrichtung als Zeilenkamera ausgebildet, die das gesamte Bild des Postgutes erfasst. Insbesondere werden auch etwaige Markierungen wie ein optischer Barcode oder auch Wertzeichen erkannt. Diese Informationen können in einer Bildverarbeitungsanlage gespeichert und mit einer geeigneten Software weiterverarbeitet werden.

Durch die Barcodeerkennung und die Erkennung von Wertzeichen können darüber hinaus beispielsweise bereits bezahlte Portoanteile berücksichtigt oder Logistikprozesse vereinfacht werden.

Der Benutzer des Gerätes wird nach der Portobestimmung über das zu zahlende Porto informiert und das Postgut kann nun frankiert werden. In einer Weiterentwicklung des Postgut-Messgerätes ist es möglich, dass auch das Frankieren mit demselben Gerät erfolgen kann.

Weitere vorteilhafte Ausgestaltungen sind den übrigen Unteransprüchen zu entnehmen.

Nachfolgend wird die Erfindung unter Bezug auf die Zeichnung näher beschrieben. Es zeigt:
- Fig. 1: eine schematische Seitenansicht eines Ausführungsbeispiels eines erfindungsgemäßen Postgut-Messgeräts;
- Fig. 2: eine detailliertere schematische Seitenansicht eines Teilbereiches eines weiteren Ausführungsbeispiels in einer ersten Betriebsstellung mit abgesenkter Tastplatte,
- Fig. 3: das Ausführungsbeispiel aus Fig. 2 in einer zweiten Betriebsstellung mit angehobener Tastplatte,
- Fig. 4: eine vergrößerte Ansicht des Bereiches der Tastplatte in der Stellung aus Fig. 3; und
- Fig. 5: die Anordnung aus Fig. 4 während des Ausmessens eines Postgutes.

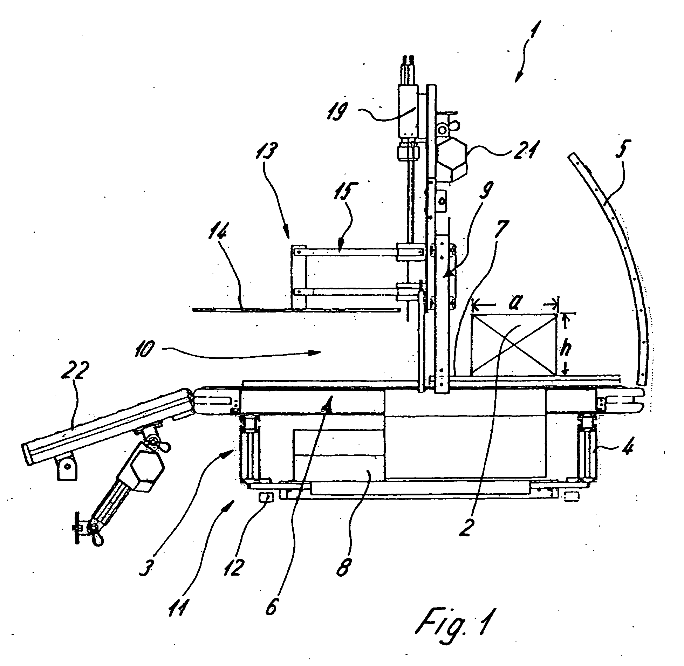

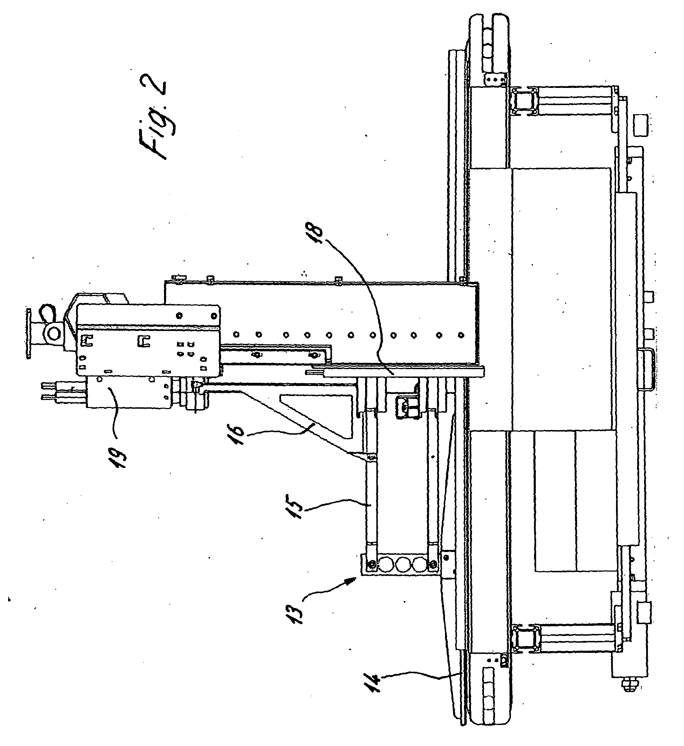

Fig. 1 und 2 zeigen zwei Ausführungsbeispiele eines Postgut-Messgerätes 1, mit welchem es für einen Benutzer möglich ist, die Abmessungen eines Postgutes 2 in drei Richtungen (Länge a, Breite (hier senkrecht zur Bildebene), Höhe h) und das Gewicht des Postgutes 2 zu bestimmen, wobei das Gerät dann aus diesen Angaben das zur Frankierung des Postgutes 2 benötigte Porto berechnet und anzeigt. Das Postgut-Messgerät 1 kann nach Art eines kompakten Automaten ausgestaltet werden, der z.B. im Zusammenspiel mit einem (hier nicht dargestellten) separaten oder in das Postgut-Messgerät integrierten Frankierautomaten einem Benutzer in einfacher und schneller Weise selbstständig die Aufgabe von Postgütern erlaubt.

Das Postgut-Messgerät 1 weist vorzugsweise ein (hier nicht dargestelltes) Gehäuse mit einem Grundgestell 3 und Rahmenteilen 4 auf. Vorteilhafterweise ist eine Eingabetür 5 vorgesehen, durch welche das Postgut 2 zweckmäßigerweise auf ein Transportband 6 mit einer Auflagefläche 7 von einem Benutzer gelegt werden kann. Das Transportband 6 ist an dem Grundgestell 3 angeordnet und wird durch einen Bandantrieb 8 angetrieben.

Zur Durchführung des eigentlichen Messvorganges wird das Postgut 2 auf der Auflagefläche 7 mit dem Transportband 6 durch eine oberhalb des Transportbandes 6 angeordnete, relativ zum Transportband 6 insbesondere elektromotorisch höhenverstellbare Zwischen- und Schleusentür 9 zu einem Messplatz 10 transportiert. Die Schleusentür 9 ist höhenverstellbar an dem Rahmenteil 4 oder an einer anderen Trägerkonstruktion angeordnet.

Am Messplatz 10 ist eine Waage 11 vorgesehen, mit der das Gewicht des Postgutes 2 auf einfache Weise bestimmt werden kann. Die Waage 11 besteht beispielhaft aus schematisch angedeuteten Messzellen 12. Die Waage 11 kann auf verschiedenste Weise realisiert werden. Möglich ist beispielsweise eine Messung der durch das Gewicht des Postgutes 2 verursachten Auslenkung des Transportbandes 6, das federnd am Grundgestell 3 gelagert wird, so dass es durch das Gewicht des Postgutes 2 relativ zum Grundgestell 3 ausgelenkt wird. Eine andere Möglichkeit ist die Verwendung von DMS-Zellen.

Zur Bestimmung des Formats des Postgutes 2 werden mechanische und optische Messeinrichtungen in Kombination verwendet. Um eine zuverlässige Bestimmung der Höhe des Postgutes 2 sicherzustellen, ist eine mechanische Tasteinrichtung 13 vorgesehen, die an den Rahmenteilen 4 des Gehäuses angeordnet ist. Mittels der Tasteinrichtung 13 wird eine voreinstellbare Kraft von 0,5 bis 10 Newton auf das Postgut ausgeübt, um Knicke, Eselohren und dgl. weitgehend glattzudrücken, wobei die einwirkende Kraft nicht so hoch ist, dass das Postgut 2 beschädigt wird.
Die Tasteinrichtung 13 weist eine hier parallel zur Auflagefläche 7 ausgerichtete Tastplatte 14 auf, die durch eine einstellbare (hier nicht zu erkennende) Feder teilweise gewichtskompensiert und vertikal zum Postgut 2 höhenverstellbar ist. Wie in den Fig. 1 und 2 veranschaulicht, ist die Tastplatte 14 mit einer Trapezlenkeranordnung 15 (vorzugsweise eine Parallellenkeranordnung) verbunden, um das Erreichen der Endposition der Tastplatte 14 sehr genau detektieren zu können. Vorteilhafterweise ist die Trapezlenkeranordnung 15 an der Schleusentür 9 angelenkt. Die Trapezlenkeranordnung 15 ist daher mit der Tastplatte 14 als Ganzes mit der Schleusentür 9 höhenverstellbar.

Liegt ein Postgut 2 unter der Tastplatte 14, wird diese solange in Richtung des Postgutes 2 abgesenkt, bis das Postgut 2 auf die Tastplatte 14 eine Gegenkraft ausübt. Da die Tastplatte 14 mit der Trapezlenkeranordnung 15 verbunden ist, kippt ein Lenker der Trapezlenkeranordnung 15 aus einer zur Tragplatte 14 orthogonalen Ebene. Diese Verkippung wird auf einen Tasthebel 16 übertragen, der ausgelenkt wird und dabei eine Lichtschranke unterbricht. Daraufhin wird der Antrieb der Schleusentür 9 unterbrochen. Diese Endposition der Tastplatte 14 ist erreicht, wenn die Gegenkraft der eingestellten Kraft an der Tastplatte 14 entspricht. Die Differenz zwischen der Auflagefläche 7 und der Unterseite der Tastplatte 14 ist dann ein Maß für die Höhe des Postgutes 2. Die Genauigkeit der Einstellung der Tastplatte 14 liegt im Bereich von 2 bis 0,5 mm.

Es ist vorteilhaft, eine Voreinstellung der Tasteinrichtung 13 beim ersten Eintritt des Postgutes 2 in den Messbereich 10 vorzunehmen, beispielsweise mittels einer optischen Erkennungseinrichtung, die z.B. kostengünstig als Lichtschrankengatter 18 im Bereich der Schleusentür 9 ausgebildet sein kann. Die Genauigkeit der Voreinstellung der Tastplatte 14 liegt im Bereich von 10 bis 5 mm. Das Lichtschrankengatter 18 umfasst senkrecht zur Bewegungsbahn angeordnete Lichtschranken, mit deren Hilfe beim Transport des Postgutes 2 die angenäherte Höhe h des Postgutes 2 bestimmt werden kann. Vorteilhafterweise ist das Lichtschrankengatter 18 im Bereich der Schleusentür 9 angeordnet.

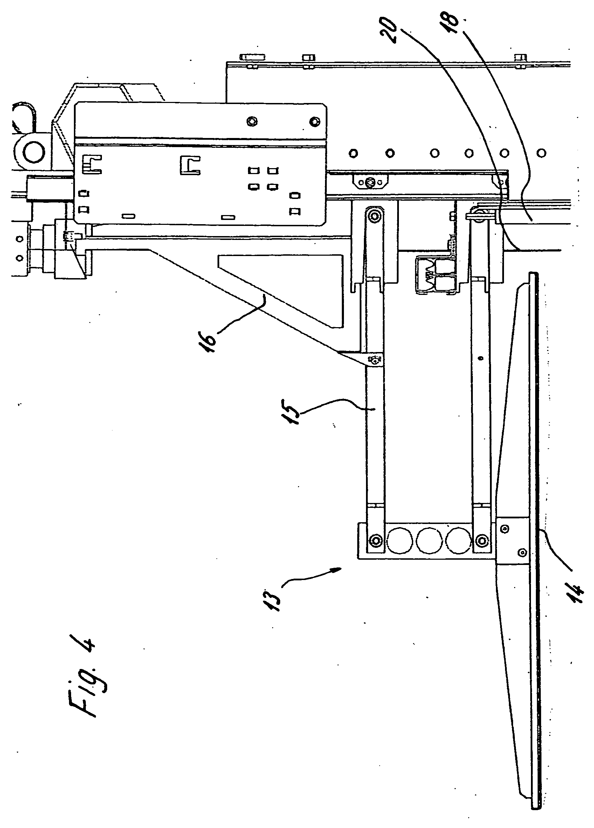

Die weiteren Abmessungen des Postgutes wie die Bestimmung der Länge a und der Breite des Postgutes werden rein optisch mit Hilfe einer Scanneranordnung ermittelt. Vorteilhafterweise ist eine Zeilenkamera 19 vorgesehen, wobei diese an der Schleusentür 9 angeordnet ist und sich somit mit der Schleusentür 9 bewegt. In Figur 4 ist der Strahlengang der Kamera mit 20 bezeichnet. Eine optische Erfassung der Postgutes 2 findet vorteilhafterweise nach der Erfassung der Höhe des Postgutes 2 statt, da dann die Schleusentür 9 die Endposition erreicht hat. Die Brennebene der Kamera 19 kann somit fest eingestellt bleiben und eine Nachfokussierung der Kamera 19 ist nicht erforderlich. Das Bild des Postgutes 2 wird erfasst, wenn das Postgut 2 wieder in Richtung der Eingangstür 5 vom Transportband 6 unter der Kamera 19 bewegt wird. Da die Schleusentür 9 mit der Tastplatte 14 verbunden ist, schließt sich die Schleusentür 9 immer nur entsprechend den Abmessungen des Postgutes 2. Vorteilhafterweise wird die Schleusentür 9 nach der Erfassung der Höhe etwa 10 mm nach oben gefahren, so dass das Postgut ohne mit der Tastplatte 14 anzustoßen durch den Aufnahmebereich der Kamera transportiert werden kann. Vorteilhafterweise ist daher die Brennebene der Kamera 19 etwa 10 mm unterhalb der Ebene der Tastplatte 14 eingestellt. Mit Hilfe geeigneter, an sich bekannter Bildverarbeitungsalgorithmen wird aus dem Bildmaterial die Länge a und die Breite des Postgutes 2 errechnet. Darüber hinaus werden auch eine Barcodekennzeichnung oder Wertzeichen von der Zeilenkamera 19 erfasst, so dass logistische Prozesse vereinfacht werden können.

### Im einzelnen arbeitet die Anordnung der Fig. 2 - 5 wie folgt:

Zunächst wird die Eingabetür 5 mittels eines hier nicht dargestellten elektromotorischen Antriebs geöffnet, so dass ein Benutzer sein Postgut 2 auf die Auflagefläche 7 des Transportbandes 6 legen kann.

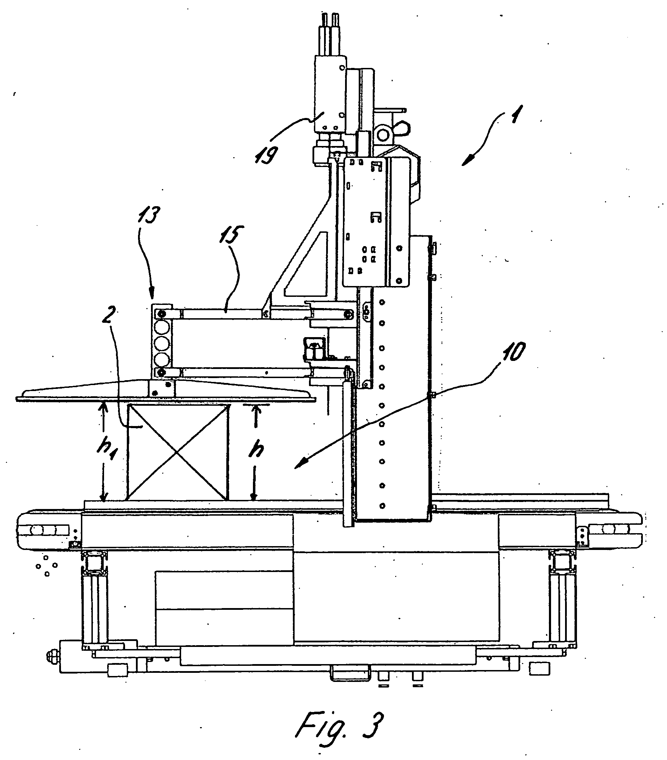

Sodann wird das Postgut 2 durch die geöffnete (Fig. 3), mit einem elektromotorischen Antrieb 21 versehene Schleusentür 9 zum Messplatz 10 transportiert, wobei während dieses Vorganges anhand der Lichtschranke 18 die Höhe h1 des Postgutes 2 optisch grob erfasst wird (z.B. mit einer Auflösung von einigen mm).

Mittels der Waage 11 wird das Gewicht des Postgutes 2 bestimmt.

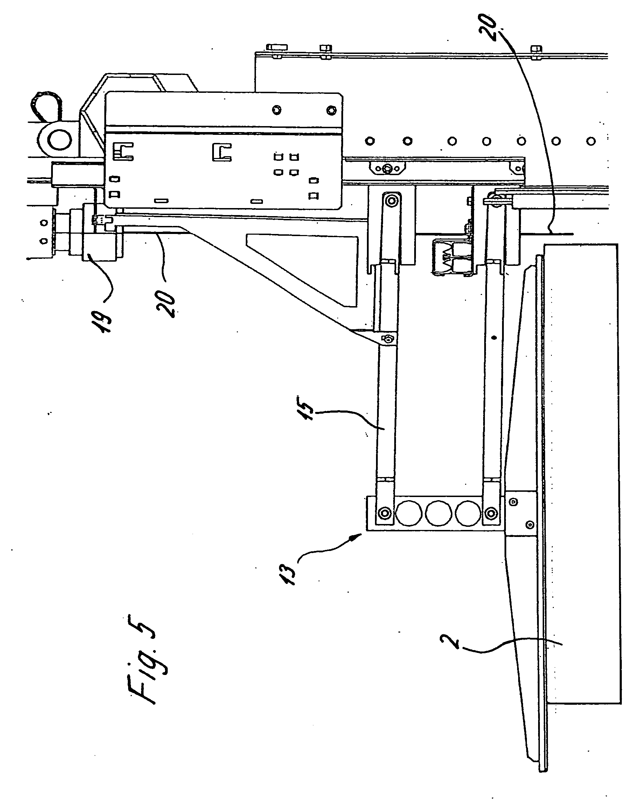

Sodann wird am Messplatz 10 die Schleusentür 6 entsprechend zur ermittelten Höhe h1 voreingestellt und sodann die Tastplatte 14 auf das Postgut 2 heruntergelassen, bis der Tastsensor 17 an dem Tasthebel 16 eine Auslenkung der Trapezlenkernanordnung 15 ermittelt. Die Endposition der Tastplatte 14 ergibt sich aus der eingestellten Kraft an der Tastplatte 14. Der Tastsensor 17 ist mit dem Antrieb 21 der Schleusentür 9 verbunden, so dass in dieser Position die Absenkbewegung der Tastplatte 14 gestoppt und die Position eines Stellantriebes (hier nicht zu erkennen) für die Tastplatte 14 bestimmt bzw. vom Stellantrieb ausgelesen (Fig. 5) wird. Die Höhe h des Postgutes 2 ist damit bestimmt.

Sodann wird die Schleusentür 9 um einige mm, z.B. 10mm, angehoben. In dieser Position ist die Kamera 19 gut auf die Oberfläche des Postgutes 2 fokussiert. Danach wird das Transportband 4 wieder angefahren und das Postgut 2 durch die Schleusentür 9 zurückgefahren, wobei die Kamera 19 optisch ein Bild der Oberfläche des Postgutes 2 erzeugt, aus dem sich aus einfache Weise mittels Algorithmen die Flächenabmessungen ermitteln lässt. Befindet sich ein Barcode auf dem Paket, so kann dieser gleichfalls aus dem aufgenommenen Bild mittels einer Software ermittelt werden.

Damit sind das Gewicht und die Abmessungen des Postguts 2 bekannt. Mit der Kamera 19 kann optional ein Barcode eingelesen werden, was ein weiterer Vorteil aus der Kombination mechanischer und optischer Messung ist. Die ermittelten Daten werden einem Rechner übermittelt, der zu Errechnung des Portos aus den gegebenen Informationen ausgelegt ist. Eine mit dem Rechner verbundene Ausgabeeinheit zeigt dem Nutzer das Ergebnis an (hier nicht dargestellt).

Danach wird das Postgut 2 entweder wieder durch die Eingabetür 5 ausgegeben oder automatisch weiter transportiert (z.B. über eine dem Transportband 4 nachgeschaltete Rollenbahn 22) sowie automatisch oder manuell frankiert (hier nicht dargestellt).

### Bezugszeichen

- Postgut-Messgerät: 1
- Postgut: 2
- Grundgestell: 3
- Rahmenteile: 4
- Eingabetür: 5
- Transportband: 6
- Auflagefläche: 7
- Bandantrieb: 8
- Schleusentür: 9
- Messplatz: 10
- Waage: 11
- Messzellen: 12
- Tasteinrichtung: 13
- Tastplatte: 14
- Trapezlenkeranordnung: 15
- Tasthebel: 16
- Tastsensor: 17
- Lichtschrankengatter: 18
- Zeilenkamera: 19
- Strahlengang: 20
- Antrieb: 21
- Rollenbahn: 22
- Länge: a
- Höhe: h

## Patentansprüche

1. Postgutmessgerät (1) zur Bestimmung der Portogebühr für ein Postgut (2) wie einen Brief, ein Paket oder ein Päckchen mit einem Rahmenteil (4) zur Aufnahme einer Messeinrichtung und einem Messplatz (10) zum Messen zumindest einer Abmessung des Postgutes (2) wie beispielsweise der Höhe h , **dadurch gekennzeichnet , dass** die Messeinrichtung eine mechanische Tasteinrichtung (13) zur Bestimmung einer Abmessung insbesondere der Höhe h des Postgutes (2) und eine optische Erfassungseinrichtung zur Bestimmung der weiteren Abmessungen wie der Länge a und der Breite b des Postgutes (2) umfasst, wobei die Tasteinrichtung (13) Tastmittel zur Berührung des Postgutes (2) mit einer vorgegebenen Kraft und einen Tastsensor (17) zur Erfassung der Endposition der Tastmittel aufweist, und wobei die optische Erfassungseinrichtung eine Kamera (19) umfasst, welche an dem Rahmenteil (4) angeordnet ist und ein Bild des Postgutes (2) erfasst.

2. Postgut-Messgerät nach Anspruch 1, **dadurch gekennzeichnet, dass** die vorgegebene Kraft zwischen 0,5 und 10 Newton beträgt.

3. Postgut-Messgerät nach Anspruch 1 oder 2, **dadurch gekennzeichnet, dass** die Tastmittel als Tastplatte (14) ausgebildet sind.

4. Postgut-Messgerät nach einem der Ansprüche 1 bis 3, **dadurch gekennzeichnet, dass** die Kamera (19) als Zeilenkamera ausgebildet ist.

5. Postgut-Messgerät nach einem der vorstehenden Ansprüche, **gekennzeichnet durch** ein Transportband (6) zum Transport des Postgutes (2) zu dem Messplatz (10).

6. Postgut-Messgerät nach Anspruch 5, **gekennzeichnet durch** eine Schleusentür (9), **durch** welche das Postgut (2) von einem Eingabebereich mittels des Transportbandes (6) zum Messplatz (10) transportiert wird.

7. Postgut-Messgerät nach Anspruch 6, **dadurch gekennzeichnet, dass** die Tasteinrichtung (13) an der Schleusentür (9) angeordnet und zusammen mit dieser höhenverstellbar ist.

8. Postgut-Messgerät nach Anspruch 7, **dadurch gekennzeichnet, dass** die Tastplatte (14) mittels einer Trapezlenkeranordnung (15) an der Schleusentür (9) angelenkt ist.

9. Postgutessgerät nach einem der vorstehenden Ansprüche, **dadurch gekennzeichnet, dass** die Tastplatte (14) mit einer einstellbaren Feder zur Gewichtskompensation versehen ist.

10. Postgut-Messgerät nach einem der vorstehenden Ansprüche, **dadurch gekennzeichnet, dass** eine Waage (11) am Messplatz (10) vorgesehen ist.

11. Postgut-Messgerät nach einem oder mehreren der vorstehenden Ansprüche, **gekennzeichnet durch** ein Lichtschrankengatter (18) zur Groberfassung der Höhe des Postgutes (2) zur Voreinstellung der Höhe der Tastplatte (14).

12. Postgut-Messgerät nach einem oder mehreren der vorstehenden Ansprüche, **gekennzeichnet durch** eine Bildverarbeitungseinrichtung, welche aus dem ermittelten Bild des Postgutes (2) die Länge und Breite des Postgutes (2) ermittelt.

13. Postgut-Messgerät nach Anspruch 12, **gekennzeichnet durch** eine Datenverarbeitungseinrichtung zur Ermittlung von Porto aus den ermittelten Abmessungen des Postgutes (2).

14. Verfahren zur automatischen Bestimmung der Portogebühr für ein Postgut wie einen Brief, ein Paket oder ein Päckchen, **dadurch gekennzeichnet, dass** mittels einer mechanischen Tasteinrichtung zumindest eine Abmessung (beispielsweise die Höhe h) des Postgutes ermittelt wird, wobei Tastmittel der Tasteinrichtung mit einer vorgegebenen Kraft das Postgut (2) berühren und ein Tastsensor (17) die Endposition der Tastmittel bestimmt, und dass mittels einer optischen Erfassungseinrichtung ein Bild des Postgutes (2) erzeugt wird.
